# EUROPEAN PATENT SPECIFICATION

(11) **EP 2 530 265 B1**
(45) Date of publication and mention of the grant of the patent: **04.04.2018**
(21) Application number: 11734796.3
(22) Date of filing: 24.01.2011
(51) Int. Cl.: F01N 3/02, F01N 3/08, F01N 3/28, F01N 3/021, F01N 13/00

(54) **EXHAUST PURIFICATION DEVICE AND EXHAUST PURIFICATION METHOD FOR DIESEL ENGINE**
ABGASREINIGUNGSVORRICHTUNG UND ABGASREINIGUNGSVERFAHREN FÜR EINEN DIESELMOTOR
DISPOSITIF DE PURIFICATION DE GAZ D'ÉCHAPPEMENT ET PROCÉDÉ DE PURIFICATION DE GAZ D'ÉCHAPPEMENT POUR MOTEUR DIESEL

(30) Priority: 25.01.2010 JP 2010013414
(43) Date of publication of application: 05.12.2012
(73) Proprietor: Isuzu Motors, Ltd., Shinagawa-Ku Tokyo 140-8722 (JP)
(72) Inventor: OSUMI, Kazuo, Fujisawa-shi Kanagawa 252-8501 (JP)
(74) Representative: Schaumburg und Partner Patentanwälte mbB
(86) International application number: PCT/JP2011/051204
(87) International publication number: WO 2011/090190

(56) References cited:
- EP-A1- 2 138 681
- WO-A1-2004/099578
- WO-A1-2006/029808
- JP-A- 54 086 474
- JP-A- 2004 100 489
- JP-A- 2004 204 699
- JP-A- 2004 239 109
- JP-A- 2004 239 109
- JP-A- 2005 061 362
- JP-A- 2005 061 362
- JP-A- 2008 279 334
- JP-A- 2009 024 619

## Description

### TECHNICAL FIELD

The present invention relates to an exhaust purification device and exhaust purification method for a diesel engine.

### BACKGROUND ART

Hazardous substances such as particulate matter (PM), nitrogen oxide (NOx), carbon monoxide (CO), hydrocarbon (HC) and the like are present in the exhaust gas of diesel engines that are installed in vehicles such as trucks, buses and the like.

Measures taken in recent years to reduce emissions of such hazardous substances from vehicles include measures for reducing the generation itself of hazardous substances, by improving combustion in the diesel engine, and measures for removing, as much as possible, the above-described hazardous substances in the exhaust gas, by arranging a plurality of post-processing units, for instance, a oxidation catalyst (DOC: Diesel Oxidation Catalyst), a diesel particulate filter (DPF: Diesel Particulate Filter), an urea-selective reduction catalyst (urea SCR: Urea-Selective Catalytic Reduction) or a NOx storage-reduction catalyst (LNT: Lean NOx Trap), in an exhaust passage of a diesel engine (Patent Documents 1 and 2).

Patent Document 1: Japanese Patent Application Publication No. 2009-264147
Patent Document 2: Japanese Patent Application Publication No. 2009-257226
An exhaust purification device according to the preamble of claim 1 is disclosed in JP 2004 239109 A.

### DISCLOSURE OF THE INVENTION

However, reducing the generation itself of hazardous substances through improved combustion in the diesel engine entails a drop of 30 to 50°C, or even greater, in the temperature of the exhaust gas that flows out of the exhaust port of the engine, as compared with a conventional instance (before improvement).

Also, arranging a plurality of post-processing units in an exhaust passage translates into a greater size of the exhaust purification device that is made up of these post-processing units, and into increased heat capacity of the exhaust purification device. Depending on the operating state of the engine, a catalyst activation temperature may be difficult to secure in the exhaust purification device having thus increased heat capacity.

Such an exhaust purification device of greater size, moreover, is disposed at a distance from the engine, on account of the problem of installation space, and the catalyst activation temperature becomes yet more difficult to secure. As a result, this impairs the hazardous-substance reducing effect that is elicited by each post-processing units of the exhaust purification device.

It is an object of the present invention, arrived at in the light of the above, to provide an exhaust purification device for a diesel engine, and an exhaust purification method that utilizes the exhaust purification device, that enable effective utilization of exhaust gas heat, and that allow reducing the size of the device, by virtue of the design of the layout of each post-processing units.

In order to attain the above object, the exhaust purification device for a diesel engine according to the present invention includes: an oxidation catalyst that is disposed in an exhaust passage of the diesel engine and purifies CO and HC in exhaust gas; a urea injection nozzle that is disposed in the exhaust passage downstream of the oxidation catalyst and generates ammonia through atomization of urea water into the exhaust gas; a turbine of a turbocharger, this turbine being disposed in the exhaust passage downstream of the urea injection nozzle and accelerating decomposition of urea through agitation of the atomized urea water; a selective reduction catalyst that is disposed in the exhaust passage downstream of the turbine and detoxifies (abates) NOx in the exhaust gas through a reduction reaction with ammonia; and a diesel particulate filter that is disposed in the exhaust passage downstream of the selective reduction catalyst and traps particulate matter in the exhaust gas.

The diesel particulate filter may be coated with an oxidation catalyst for oxidizing the trapped particulate matter.

A subsequent-stage oxidation catalyst may be further disposed, in the exhaust passage downstream of the diesel particulate filter, for detoxifying, through oxidation, ammonia that flows out of the diesel particulate filter.

The oxidation catalyst has a manifold oxidation catalyst disposed at each cylinder portion of an exhaust manifold of the diesel engine, and a pre-turbine oxidation catalyst disposed at a junction portion of the exhaust manifold; the manifold oxidation catalyst being superior to the pre-turbine oxidation catalyst in CO purification. The pre-turbine oxidation catalyst may be superior to the manifold oxidation catalyst in HC purification.

The manifold oxidation catalyst may be a catalyst that includes an oxide semiconductor and an oxide having an oxygen storage material; and the pre-turbine oxidation catalyst may be a metal catalyst.

The oxide having the oxygen storage material may be an oxide containing Ce; and the oxide semiconductor may be TiO2, ZnO or Y2O3.

A noble metal may be carried on the oxide having an oxygen storage material.

An exhaust purification method that is used in the exhaust purification device for a diesel engine described above includes: generating 2NH3+H2SO4→(NH4)2SO4 through reaction of ammonia (NH3), generated from urea water atomized out of the urea injection nozzle, and sulfur oxide (SOx) in exhaust gas; generating ammonia (NH3) through thermal decomposition of the (NH4)2SO4 that becomes trapped in the selective reduction catalyst; and using the ammonia (NH3) in a reduction reaction of NOx.

By virtue of the design of the layout of each post-processing units, the exhaust purification device and exhaust purification method for a diesel engine according to the present invention enable effective utilization of exhaust gas heat, and allow reducing the size of the device.

### BRIEF DESCRIPTION OF THE DRAWINGS

Fig. 1 is an explanatory diagram illustrating an exhaust purification device for a diesel engine according to a comparative example (not an embodiment of the present invention), and illustrating a relationship between SCR and DOC temperature and purification rates; and
Fig. 2 is an explanatory diagram illustrating an exhaust purification device for a diesel engine according to an embodiment of the present invention, and illustrating a relationship between SCR and DOC temperature and purification rates.

### MODE FOR CARRYING OUT THE INVENTION

An embodiment of the present invention will be explained next based on accompanying drawings.

### Comparative example

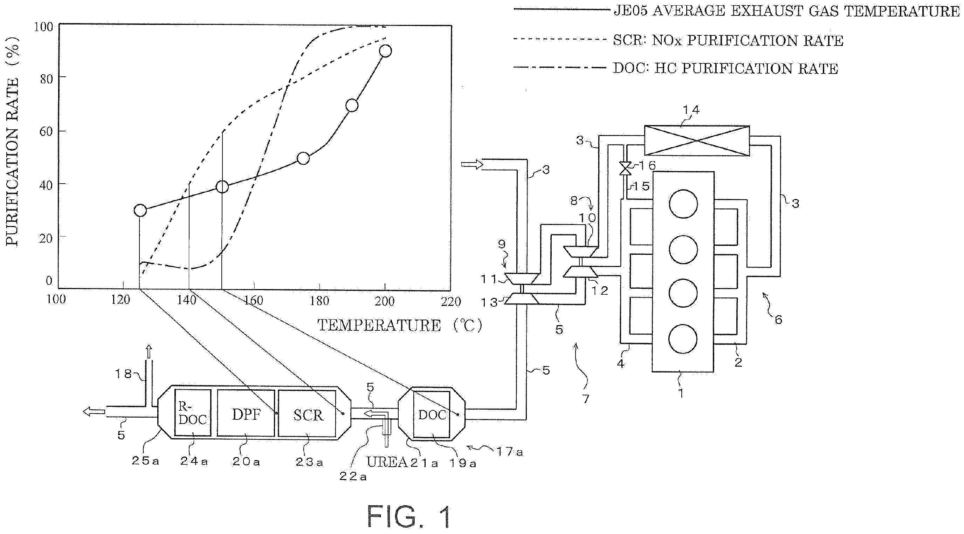

With reference to Fig. 1, an explanation follows first on a comparative example, for contrast versus the embodiment of the present invention.

As illustrated in Fig. 1, an intake pipe 3 is connected to an intake manifold 2 and an exhaust pipe 5 is connected to an exhaust manifold 4 of a diesel engine 1. The intake manifold 2 and the intake pipe 3 make up an intake passage 6, and the exhaust manifold 4 and the exhaust pipe 5 make up an exhaust passage 7. A high-pressure stage turbocharger (high-pressure stage turbo) 8 and a low-pressure stage turbocharger (low-pressure stage turbo) 9 are connected in series to the intake pipe 3 and the exhaust pipe 5.

Specifically, a high-pressure stage turbine 12 of the high-pressure stage turbo 8 and a low-pressure stage turbine 13 of the low-pressure stage turbo 9 are disposed in the exhaust pipe 5, and a high-pressure stage compressor 10 of the high-pressure stage turbo 8 and a low-pressure stage compressor 11 of the low-pressure stage turbo 9 are disposed in the intake pipe 3. An intercooler 14 is disposed in the intake pipe 3 downstream of the high-pressure stage compressor 10. The exhaust manifold 4 and the intake pipe 3 are connected by an EGR pipe 15. An EGR valve 16 is disposed in the EGR pipe 15. An EGR cooler (not shown) may be provided in the EGR pipe 15.

An exhaust purification device 17a that purifies hazardous substances (PM, NOx, CO, HC and the like) in exhaust gas is disposed in exhaust pipe 5 downstream of the low-pressure stage turbine 13. The exhaust purification device 17a is described further on. To the exhaust pipe 5 downstream of the exhaust purification device 17a there is connected a low-pressure EGR pipe 18 that leads part of the exhaust gas that is directed towards a muffler, not shown, to the intake pipe 3 (to any site from among upstream of the low-pressure stage compressor 11, between the low-pressure stage compressor 11 and the high-pressure stage compressor 10, or upstream of the high-pressure stage compressor 10). A low-pressure EGR valve (not shown) is provided in the low-pressure EGR pipe 18. Needless to say, an EGR cooler may also be provided.

The exhaust purification device 17a comprises a first casing 21a in the interior whereof a oxidation catalyst (DOC) 19a is accommodated, a urea injection nozzle 22a that is disposed in the exhaust pipe 5, downstream of the first casing 21a, and that atomizes urea water into the exhaust pipe 5, and a second casing 25a disposed in the exhaust pipe 5 downstream of the urea injection nozzle 22a and that accommodates, in the interior thereof, an urea-selective reduction catalyst (urea SCR) 23a, a diesel particulate filter (DPF) 20a and a subsequent-stage oxidation catalyst (R-DOC: Rear Diesel Oxidation Catalyst) 24a.

The DOC 19a has the function of purifying, through oxidation, CO and HC in the exhaust gas, and of oxidizing NO. The urea injection nozzle 22a has the function of generating ammonia (NH₃) through hydrolysis and thermal decomposition of urea water that is atomized into the exhaust pipe 5. The urea SCR 23a has the function of detoxifying NOx in the exhaust gas into water and nitrogen, through a reduction reaction with ammonia. The DPF 20a has the function of trapping PM in the exhaust gas. The R-DOC 24a has the function of detoxifying, through oxidation, the ammonia that flows out of the urea SCR 23a.

In such an exhaust purification device 17a, all the post-processing units (DOC 19a, urea injection nozzle 22a, SCR 23a, DPF 20a and R-DOC 24a) that make up the exhaust purification device 17a are disposed downstream of the low-pressure stage turbine 13, and hence the distance from the exhaust port of the diesel engine 1 up to the exhaust purification device 17a is long. Accordingly, the exhaust gas that flows out of the exhaust port of the diesel engine 1 dumps heat as it passes through the exhaust pipe 5, expands in the low-pressure stage turbine 13, and reaches thereafter the exhaust purification device 17a. In consequence, the temperature of the DOC 19a, SCR 23a, DPF 20a and R-DOC 24a may in some instances fail to rise up to the catalyst activation temperature, depending on the operating state of the diesel engine 1.

For instance, upon operation of the diesel engine 1 on the basis of a transient mode (acceleration and deceleration mode) referred to as JE05 mode, the average inlet temperature of the DOC 19a, the SCR 23a and the DPF 20a was of about 150°C for the DOC 19a, about 140°C for the SCR 23a and about 125°C for the DPF 20a. As illustrated in Fig. 1, the HC purification rate of the DOC 19a at 150°C is about 10% (likewise the CO purification rate), and the NOx purification rate of the SCR 23a at 140°C is about 40%. As a result, the average purification rate in the JE05 mode was 50% or less for all HC, CO and NOx.

To regenerate the DPF 20a (to burn the trapped PM) during a test in the JE05 mode, it is necessary to heat the DPF 20a from 140°C to 400°C or above. When post-injection is performed to that end (injection in which fuel is spewed out of an injector, but not for the purpose of combustion in the diesel engine 1, and which takes place after ordinary fuel injection into the combustion chamber of the diesel engine 1), the fuel consumption worsens by about 5%, and HC is generated.

Also, a predetermined distance from the urea injection position of the urea injection nozzle 22a up to the inlet of the SCR 23a is required (it is experimentally found that this distance must be 25 cm or longer) in order to cause the urea water that is atomized into the exhaust pipe 5 from the urea injection nozzle 22a to diffuse homogeneously until reaching the SCR 23a, and to enable thereby the urea water to decompose appropriately into ammonia. This distance translates into a drop in the temperature of the SCR 23a and into a greater size of the exhaust purification device 17a.

### Embodiment

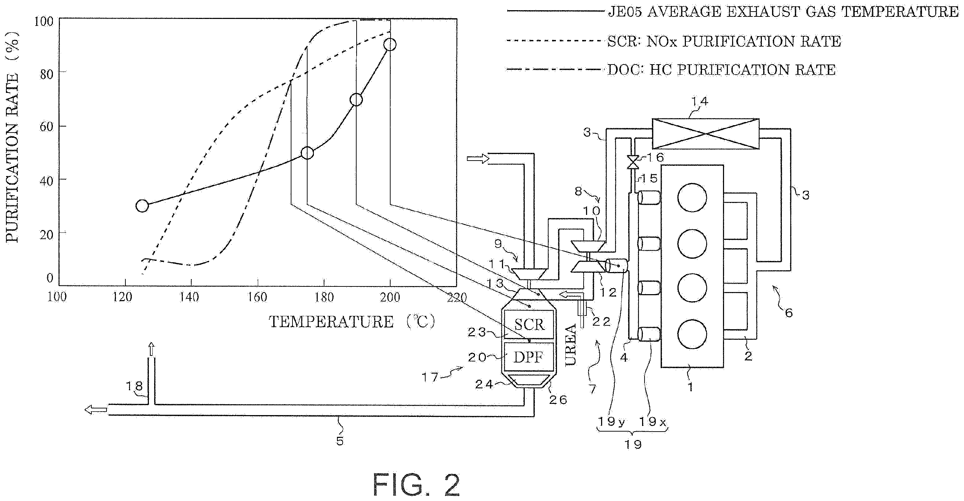

An embodiment of the present invention, in which the shortcomings of the above-described comparative example have been addressed, is explained next with reference to Fig. 2. The present embodiment shares constituent elements with those of the comparative example described above. Therefore, shared constituent elements will be referred to using the same reference numerals, and an explanation thereof will be omitted. In the exhaust purification device 17, a suffix "a" denotes the comparative example, while an absence of the suffix "a" denotes the present embodiment.

As illustrated in Fig. 2, the exhaust purification device 17 of the diesel engine 1 according to the present embodiment is provided with: a previous-stage oxidation catalyst (DOC) 19, disposed in the exhaust passage 7 of the diesel engine 1, that purifies CO and HC in the exhaust gas and that oxidizes NO; a urea injection nozzle 22 disposed in the exhaust passage 7, downstream of the DOC 19, for generating ammonia through atomization of urea water into the exhaust gas; the turbine (low-pressure stage turbine) 13, disposed in the exhaust passage 7, downstream of the urea injection nozzle 22, and that accelerates decomposition of urea through agitation of the atomized urea water; a selective reduction catalyst (urea SCR) 23 disposed in the exhaust passage 7, downstream of the low-pressure stage turbine 13, that detoxifies NOx in the exhaust gas through a reduction reaction with ammonia; and a diesel particulate filter (DPF) 20 disposed in the exhaust passage 7, downstream of the urea SCR 23, that traps particulate matter (PM) in the exhaust gas. A subsequent-stage oxidation catalyst (R-DOC) 24 for detoxifying, through oxidation, the ammonia that flows out of the urea DPF 20, is provided in the exhaust passage 7 downstream of the DPF 20.

Each post-processing unit (DOC 19, urea injection nozzle 22, SCR 23, DPF 20 and R-DOC 24) is explained in detail further on.

In the configuration of the present embodiment there is provided a two-stage turbocharger resulting from connecting, in series, the high-pressure stage turbo 8 and the low-pressure stage turbo 9; the urea injection nozzle 22 is provided between the low-pressure stage turbine 13 and the high-pressure stage turbine 12; and the DOC 19 is disposed upstream of the high-pressure stage turbine 12. However, the configuration may involve a single-stage turbocharger, such that the high-pressure stage turbo 8 is omitted. In that case, the urea injection nozzle 22 is disposed upstream of the turbine (low-pressure stage turbine 13 in Fig. 2) of only one of the turbochargers (low-pressure stage turbo 9 in Fig. 2), and the DOC 19 is disposed upstream of the urea injection nozzle 22.

In the exhaust purification device 17 according to the present embodiment, the urea injection nozzle 22 and the DOC 19 are disposed upstream of the low-pressure stage turbine 13. Therefore, the arrangement position of each post-processing unit (DOC 19, SCR 23, DPF 20, R-DOC 24) can thus be brought closer to the exhaust port of the diesel engine 1 than in the case of the comparative example illustrated in Fig. 1, where all the post-processing units, including the urea injection nozzle 22 and the DOC 19, are disposed downstream of the low-pressure stage turbine 13. Accordingly, this allows utilizing effectively the heat of the exhaust gas, and makes it easier to maintain the temperature of the post-processing units at the catalyst activation temperature.

For instance, the average inlet temperature of the DOC 19, the SCR 23 and the DPF 20, upon operation of the diesel engine 1 based on a JE05 mode, was of about 200°C for the DOC 19, about 175°C for the SCR 23 and about 170°C for the DPF 20. As illustrated in Fig. 2, the HC purification rate of the DOC 19 at 200°C is about 100% (likewise the CO purification rate), and the NOx purification rate of the SCR 23 at 175°C is about 80%. In the present embodiment, thus, the purification rates of HC, CO and NOx are significantly enhanced vis-à-vis those in the comparative example.

In the present embodiment, the DPF 20 is disposed directly below the low-pressure stage turbine 13, with the SCR 23 interposed in between. The arrangement position of the DPF 20 lies further upstream, as compared with an instance where the DPF 20a is disposed downstream of the low-pressure stage turbine 13, with the DOC 19a, the urea injection nozzle 22a and the SCR 23a interposed in between, as in the comparative example illustrated in Fig. 1. Therefore, the temperature of the DPF 20 rises more than in the comparative example, and PM trapped in the DPF 20 can be burned, even with reduced post-injection, or even without post-injection, depending on the operating state. As a result, this allows averting impairment of fuel consumption caused by post-injection, and allows suppressing generation of HC due to post-injection.

In the present embodiment, moreover, the urea injection nozzle 22 is disposed upstream of the low-pressure stage turbine 13. Therefore, the urea water atomized out of the urea injection nozzle 22 is agitated by the low-pressure stage turbine 13, and diffuses substantially homogeneously downstream of the low-pressure stage turbine 13. Hydrolysis and thermal decomposition of urea are accelerated as a result, and ammonia can be generated appropriately even though the distance from the urea injection position of the urea injection nozzle 22 up to the inlet of the SCR 23 is shorter than in the comparative example. Thus, the arrangement position of the SCR 23 can be brought closer to the low-pressure stage turbine 13 than is the case in the comparative example. Accordingly, this allows increasing the temperature of the SCR 23 above that in the comparative example, and allows achieving a more compact exhaust purification device 17.

Each post-processing units are explained in detail next.

### DOC

The DOC 19 has manifold oxidation catalysts (M/F-DOCs) 19x that are disposed in respective cylinder portions of the exhaust manifold 4 of the diesel engine 1, and a pre-turbine oxidation catalyst (P/T-DOC) 19y disposed at the junction portion of the exhaust manifold 4. The M/F-DOCs 19x used on the upstream side are superior in CO purification to the P/T-DOC 19y on the downstream side. The P/T-DOC 19y used in the downstream side is superior in HC purification to the M/F-DOCs 19x on the upstream side. That is because, ordinarily, DOCs afford characteristically better HC adsorption/purification if no CO is present in the exhaust gas, but exhibit no impaired CO adsorption/purification even if HC are present in the exhaust gas.

The M/F-DOCs 19x are made up of a catalyst that comprises an oxide semiconductor and an oxide having an oxygen storage material (OSC: Oxygen Storage Capacity) that is superior in CO purification (CO adsorption). The P/T-DOC 19y is made up of a metal catalyst (for instance, a Pt catalyst) superior in HC purification (HC adsorption). Configuring the DOC 19 as described above allows achieving a catalyst configuration that is superior in low-temperature activity, and makes it possible to reduce the size of the DOC 19 as a whole and to arrange the DOC 19 upstream of the high-pressure stage turbine 12 without difficulty.

Each M/F-DOC 19x may be a catalyst layer that comprises a catalyst in which there are mixed an oxide semiconductor and an oxide having OSC. A catalyst wherein a noble metal catalyst (Pt catalyst or the like) and an HC adsorption material are mixed together may be used in the P/T-DOC 19y. An oxide comprising cerium (Ce) (for instance, cerium oxide) may be used in the oxide having OSC, and a noble metal (for instance, Pt) may be carried on the oxide. In the oxide semiconductor there is used TiO₂, ZnO or Y₂O₃.

The EGR pipe 15 is connected to the exhaust manifold 4 between the M/F-DOCs 19x and the P/T-DOC 19y. After undergoing CO purification by passing through the M/F-DOCs 19x, the exhaust gas passes through the EGR pipe 15 and returns to the intake pipe 3. Unburned substances (SOF component: soluble organic fraction elements) in the returning exhaust gas decrease as a result, and the adverse influence that the SOF exerts on the EGR valve 16 and the EGR cooler (not shown), for instance contamination, clogging and so forth, can be suppressed.

### Urea injection nozzle

The urea injection nozzle 22 is disposed in the exhaust pipe 5 upstream of the low-pressure stage turbine 13. As a result, urea water atomized out of the urea injection nozzle 22 is agitated by the low-pressure stage turbine 13, and diffuses substantially homogeneously downstream of the low-pressure stage turbine 13, so that hydrolysis and thermal decomposition of urea are thus accelerated. As a result, the distance from the urea injection position of the urea injection nozzle 22 up to the inlet of the SCR 23 can be made shorter than in the comparative example, the temperature of the SCR 23 can be increased above that in the comparative example, as already explained, and the exhaust purification device 17 can be made more compact.

Although sulfur oxide (SOx) is generated in the exhaust gas during high EGR combustion, corrosion of the exhaust pipe 5 and the low-pressure stage turbine 13 due to this SOx can be suppressed by virtue of the reactions below.

Firstly, the urea water atomized out of the urea injection nozzle 22 undergoes hydrolysis and thermal decomposition to generate ammonia (NH₃), which reacts with SO₄ and so forth in the exhaust gas, to generate 2NH₃+H₂SO₄→(NH₄)₂SO₄. The generated (NH₄)₂SO₄ is a neutral substance, and hence the problem of corrosion of the exhaust pipe 5 and the low-pressure stage turbine 13 does not occur.

Thereafter, the (NH₄)₂SO₄ is captured at the SCR 23 directly below the low-pressure stage turbine 13, undergoes thermal decomposition, to generate ammonia (NH₃), when at or above a predetermined temperature (for instance, 120°C), and the ammonia (NH₃) is used in a reduction reaction of NOx in the SCR 23.

### SCR

The SCR 23 is disposed at a position downstream of the low-pressure stage turbine 13, and has the function of detoxifying NOx in the exhaust gas into water and nitrogen, through a reduction reaction with ammonia (NH₃).

Through the use of a catalyst carrier (monolith catalyst) or the like, as the SCR 23 a small SCR was used that had an increased amount of catalyst per specific volume, and in which the volume was reduced by 50% or more with respect to a conventional instance.

In the embodiment of Fig. 2, the SCR 23, DPF 20 and R-DOC 24 are accommodated in the casing 26 that is formed integrally with the turbine housing of the low-pressure stage turbine 13, but the casing 26 may be separate from the turbine housing, and may be connected to the latter by way of a short exhaust pipe.

### DPF

The DPF 20 is disposed at a position downstream of the SCR 23, in the casing 26; herein there is used a DPF 20 (catalyst-carrying DPF) wherein a filter main body is coated with an oxidation catalyst (noble metal catalyst) for burning (oxidizing) the trapped PM. A DPF 20 not coated with an oxidation catalyst may be used, however, if an exhaust gas temperature can be secured that allows the PM trapped in the DPF 20 to self-combust.

In the structure of the filter main body of the DPF 20, the porosity, pore size, and wall thickness are optimized so that the purification characteristics (PM trapping characteristics) are similar to those of conventional products, and in such a manner that pressure loss is small. Thanks to these improvements, a small DPF was used that had a volume 50% or more smaller than that in a conventional product.

### R-DOC

The R-DOC 24 is disposed at a position downstream of the DPF 20, in the casing 26, and has the function of detoxifying, through oxidation, excess ammonia (NH₃) that flows through the DPF 20 without having been consumed in the reduction reaction in the SCR 23.

If an ordinary catalyst-carrying DPF is used as the DPF 20, the ammonia (NH₃) that flows out of the SCR 23 without having been consumed in the reduction reaction in the SCR 23 becomes detoxified through oxidation during passage through the catalyst-carrying DPF 20, and hence the R-DOC 24 may be omitted. In this case as well, the R-DOC 24 may nonetheless be provided for the sake of thorough detoxification of ammonia (NH₃).

The R-DOC 24 can be omitted if the atomization amount of urea water is controlled, in accordance with the operating state of the diesel engine 1, in such a manner that all the ammonia (NH₃) generated from the urea water that is atomized out of the urea injection nozzle 22 is consumed in the SCR 23.

### EXPLANATION OF REFERENCE NUMERALS

1 diesel engine
4 exhaust manifold
7 exhaust passage
9 turbocharger (low-pressure stage turbocharger)
13 turbine (low-pressure stage turbine)
19 oxidation catalyst (DOC)
19x manifold oxidation catalyst (M/F-DOC)
19y pre-turbine oxidation catalyst (P/T-DOC)
22 urea injection nozzle
20 diesel particulate filter (DPF)
23 selective reduction catalyst (SCR)
24 subsequent-stage oxidation catalyst (R-DOC)

## Claims

1. An exhaust purification device for a diesel engine (1), comprising:
an oxidation catalyst (19) that is disposed in an exhaust passage (7) of the diesel engine (1) and purifies CO and HC in exhaust gas;
a urea injection nozzle (22) that is disposed in the exhaust passage (7) downstream of the oxidation catalyst (19) and generates ammonia through atomization of urea water into the exhaust gas;
a turbine (13) of a turbocharger (9), this turbine (13) being disposed in the exhaust passage downstream of the urea injection nozzle (22) and accelerating decomposition of urea through agitation of the atomized urea water; and
a selective reduction catalyst (23) that is disposed in the exhaust passage downstream of the turbine (13) and detoxifies NOx in the exhaust gas through a reduction reaction with ammonia;
**characterized by** a diesel particulate filter (20) that is disposed in the exhaust passage downstream of the selective reduction catalyst (23) and traps particulate matter in the exhaust gas, wherein
the oxidation catalyst (19) has a manifold oxidation catalyst (19x) disposed at each cylinder portion of an exhaust manifold (4) of the diesel engine (1), and a pre-turbine oxidation catalyst (19y) disposed at a junction portion of the exhaust manifold (4),
the manifold oxidation catalyst (19x) being superior to the pre-turbine oxidation catalyst (19y) in CO purification.

2. The exhaust purification device for a diesel engine (1) according to claim 1, wherein the diesel particulate filter is coated with an oxidation catalyst for oxidizing the trapped particulate matter.

3. The exhaust purification device for a diesel engine according to claim 1 or 2, further comprising a subsequent-stage oxidation catalyst disposed in the exhaust passage downstream of the diesel particulate filter and detoxifying, through oxidation, ammonia that flows out of the diesel particulate filter.

4. The exhaust purification device for a diesel engine according to any of claims 1 to 3, wherein
the pre-turbine oxidation catalyst (19y) being superior to the manifold oxidation catalyst (19x) in HC purification.

5. The exhaust purification device (1) for a diesel engine according to claim 4, wherein
the manifold oxidation catalyst (19x) is a catalyst that includes an oxide semiconductor and an oxide having an oxygen storage material; and
the pre-turbine oxidation catalyst (19y) is a metal catalyst.

6. The exhaust purification device for a diesel engine (1) according to claim 5, wherein
the oxide having an oxygen storage material is an oxide containing Ce, and
the oxide semiconductor is TiO₂ ZnO or Y₂O₃.

7. The exhaust purification device for a diesel engine (1) according to claim 5 or 6, wherein a noble metal is carried on the oxide having an oxygen storage material.

## Patentansprüche

1. Abgasreinigungsvorrichtung für einen Dieselmotor (1), umfassend:
einen Oxidationskatalysator (19), der in einem Abgaskanal (7) des Dieselmotors (1) angeordnet ist und CO und HC in Abgas reinigt;
eine Harnstoffeinspritzdüse (22), die in dem Abgaskanal (7) stromabwärts des Oxidationskatalysators (19) angeordnet ist und Ammoniak durch Versprühen von Harnstoffwasser in das Abgas erzeugt;
eine Turbine (13) eines Turboladers (9), wobei diese Turbine (13) in dem Abgaskanal stromabwärts der Harnstoffeinspritzdüse (22) angeordnet ist und die Zersetzung von Harnstoff durch Aufrühren des versprühten Harnstoffwassers beschleunigt; und
einen Selektivreduktionskatalysator (23), der in dem Abgaskanal stromabwärts der Turbine (13) angeordnet ist und NOx in dem Abgas durch eine Reduktionsreaktion mit Ammoniak unschädlich macht;
**gekennzeichnet durch** einen Dieselpartikelfiter (20), der in dem Abgaskanal stromabwärts des Selektivreduktionskatalysators (23) angeordnet ist und Partikularstoff in dem Abgas einfängt, wobei
der Oxidationskatalysator (19) einen Krümmeroxidationskatalysator (19x), der an jedem Zylinderabschnitt eines Abgaskrümmers (4) des Dieselmotors (1) angeordnet ist, und einen Vorturbinenoxidationskatalysator (19y) hat, der an einem Übergangsabschnitt des Abgaskrümmers (4) angeordnet ist,
wobei der Krümmeroxidationskatalysator (19x) dem Vorturbinenoxidationskatalysator (19y) in der CO-Reinigung überlegen ist.

2. Abgasreinigungsvorrichtung für einen Dieselmotor (1) nach Anspruch 1, wobei der Dieselpartikelfilter mit einem Oxidationskatalysator zum Oxidieren des eingefangenen Partikularstoffs beschichtet ist.

3. Abgasreinigungsvorrichtung für einen Dieselmotor nach Anspruch 1 oder 2, ferner umfassend einen Folgestufenoxidationskatalysator, der in dem Abgaskanal stromabwärts des Dieselpartikelfilters angeordnet ist und durch Oxidation Ammoniak unschädlich macht, das aus dem Dieselpartikelfilter ausströmt.

4. Abgasreinigungsvorrichtung für einen Dieselmotor nach einem der Ansprüche 1 bis 3, wobei
der Vorturbinenoxidationskatalysator (19y) dem Krümmeroxidationskatalysator (19x) in der HC-Reinigung überlegen ist.

5. Abgasreinigungsvorrichtung (1) für einen Dieselmotor nach Anspruch 4, wobei
der Krümmeroxidationskatalysator (19x) ein Katalysator ist, der einen Oxid-Halbleiter und ein Oxid enthält, das ein Sauerstoffspeichermaterial hat; und der Vorturbinenoxidationskatalysator (19y) ein Metallkatalysator ist.

6. Abgasreinigungsvorrichtung für einen Dieselmotor (1) nach Anspruch 5, wobei
das Oxid, das ein Sauerstoffspeichermaterial hat, ein Oxid ist, das Ce enthält, und
der Oxid-Halbleiter TiO₂, ZnO oder Y₂O₃ ist.

7. Abgasreinigungsvorrichtung für einen Dieselmotor (1) nach Anspruch 5 oder 6, wobei ein Edelmetall auf dem Oxid getragen ist, das ein Sauerstoffspeichermaterial hat.

## Revendications

1. Dispositif d'épuration d'échappement pour un moteur diesel (1), comprenant :
un catalyseur d'oxydation (19) qui est placé dans un passage d'échappement (7) du moteur diesel (1) et qui purifie le CO et le HC dans le gaz d'échappement ;
une buse d'injection d'urée (22) qui est placée dans le passage d'échappement (7), en aval du catalyseur d'oxydation (19) et qui génère de l'ammoniac par atomisation de l'eau d'urée dans le gaz d'échappement ;
une turbine (13) d'un turbocompresseur (9), ladite turbine (13) étant placée dans le passage d'échappement, en aval de la buse d'injection d'urée (22) et accélérant la décomposition de l'urée par agitation de l'eau d'urée atomisée ; et
un catalyseur de réduction sélective (23) qui est placé dans le passage d'échappement, en aval de la turbine (13) et qui détoxifie le NOx dans le gaz d'échappement par réaction de réduction avec l'ammoniac ;
**caractérisé par** un filtre à particules diesel (20) qui est placé dans le passage d'échappement, en aval du catalyseur de réduction sélective (23) et qui piège les matières particulaires dans le gaz d'échappement, dans lequel
le catalyseur d'oxydation (19) possède un catalyseur d'oxydation de collecteur (19x) placé au niveau de chaque partie de cylindre d'un collecteur d'échappement (4) du moteur diesel (1), et un catalyseur d'oxydation avant turbine (19y) placé au niveau d'une partie de jonction du collecteur d'échappement (4),
le catalyseur d'oxydation de collecteur (19x) étant supérieur au catalyseur d'oxydation avant turbine (19y) dans l'épuration du CO.

2. Dispositif d'épuration d'échappement pour un moteur diesel (1) selon la revendication 1, dans lequel le filtre à particules diesel est revêtu d'un catalyseur d'oxydation destiné à oxyder les matières particulaires piégées.

3. Dispositif d'épuration d'échappement pour un moteur diesel selon la revendication 1 ou 2, comprenant en outre un catalyseur d'oxydation d'étage postérieur placé dans le passage d'échappement, en aval du filtre à particules diesel et détoxifiant, par oxydation, l'ammoniac qui sort du filtre à particules diesel.

4. Dispositif d'épuration d'échappement pour un moteur diesel selon l'une quelconque des revendications 1 à 3, dans lequel
le catalyseur d'oxydation avant turbine (19y) est supérieur au catalyseur d'oxydation de collecteur (19x) dans l'épuration de HC.

5. Dispositif d'épuration d'échappement (1) pour un moteur diesel selon la revendication 4, dans lequel
le catalyseur d'oxydation de collecteur (19x) est un catalyseur qui inclut un oxyde semiconducteur et un oxyde avec un matériau de stockage d'oxygène ; et
le catalyseur d'oxydation avant turbine (19y) est un catalyseur métallique.

6. Dispositif d'épuration d'échappement pour un moteur diesel (1) selon la revendication 5, dans lequel
l'oxyde contenant un matériau de stockage d'oxygène est un oxyde contenant du Ce, et
l'oxyde semiconducteur est TriO₂, ZnO ou Y₂O₃.

7. Dispositif d'épuration d'échappement (1) pour un moteur diesel selon la revendication 5 ou 6, dans lequel l'oxyde ayant un matériau de stockage d'oxygène est revêtu d'un métal noble.
